Europäisches Patentamt

European Patent Office

Office européen des brevets

(11) Publication number: **0 556 805 A2**

# EUROPEAN PATENT APPLICATION

(21) Application number: **93102483.0**

(51) Int. Cl.5: **G06F 11/00**, G06F 11/16

(22) Date of filing: **17.02.93**

(30) Priority: **20.02.92 JP 33116/92**

(43) Date of publication of application:
**25.08.93 Bulletin 93/34**

(84) Designated Contracting States:
**DE FR GB**

(71) Applicant: **HITACHI, LTD.**
**6, Kanda Surugadai 4-chome**
**Chiyoda-ku, Tokyo 101(JP)**

(72) Inventor: **Bekkki, Keisuke**
**17-2-503, Moriyamacho-3-chome**
**Hitachi-shi(JP)**
Inventor: **Tashiro, Korefumi**
**5-1, Omikacho-6-chome**
**Hitachi-shi(JP)**
Inventor: **Morooka, Yasuo**
**2-9, Hanayamacho-2-chome**
**Hitachi-shi(JP)**

Inventor: **Kobayashi, Nobuhisa**
**63-41, Tabiko**
**Katsuta-shi(JP)**
Inventor: **Nohmi, Makoto**
**3-1-317, Sakado-3-chome, Takatsu-ku**
**Kawasaki-shi(JP)**
Inventor: **Kera, Kazuo**
**37-55, Onumacho-3-chome**
**Hitachi-shi(JP)**
Inventor: **Hosaka, Hideyuki**
**Tsukubadai Apato 8-104, 663, Ichige**
**Katsuta-shi(JP)**
Inventor: **Yanagi, Hitoshi**
**3282-5, Sakadocho**
**Mito-shi(JP)**

(74) Representative: **Patentanwälte Beetz - Timpe -**
**Siegfried - Schmitt-Fumian- Mayr**
**Steinsdorfstrasse 10**
**D-80538 München (DE)**

(54) **Fail-safe information processing system.**

(57) An information processing system is provided to realize a fail-safe function by software. At least three information processors (1, 2, 3) are provided. In each information processor, the same data added (101, 201, 301) with a cyclic redundancy code is subjected to a predetermined masking process (102, 202, 302) and is thereafter encoded on the basis of a cyclic logical shift. A logical product or exclusive OR combination of encoded data from the information processors is made and is subjected to an inverse cyclic logical shift for decoding into an original data. By displaying the decoded data on a display device or the like, the original data becomes identifiable since a character having a meaning is displayed if the decoded data is normal and a character not clear in meaning is displayed if the decoded data is abnormal.

FIG. I

EP 0 556 805 A2

BACKGROUND OF THE INVENTION

The present invention relates to an information processing system which requires fail-safe capability.

An example of the conventional system requiring a fail safety has been disclosed by the article written by Akita et al and entitled "RAILWAY SIGNAL FAIL SAFE SYSTEM", Journal of The Institute of Electronics, Information and Communication Engineers of Japan, Vol. 73, November 1990, pp. 1203-1208. This article has disclosed a system which includes controllers in a redundant system configuration and in which the fail safety of control information outputted is ensured by making a majority logic of outputs from the controllers of the redundant system configuration. In this system, however, if the fail safety of a majority decision circuit for making the majority decision for outputs from the controllers is not ensured, there is a fear that when the majority decision circuit becomes faulty, the majority decision circuit itself outputs crucial control information in which dangerous control may be executed if an error occurs. Namely, the fail safety of the whole of the system becomes unattainable if the majority decision circuit becomes faulty. Therefore, the majority decision circuit must be constructed by a special fail-safe logical device (or a special logical circuit having fail-safe capability ensured therefor) as disclosed by JP-A-59-28725.

Also, there is known a system in which a fail safety is ensured on the basis of the concept of software diversity, as disclosed by the above-mentioned Akita et al's article. In such a system, two or more programs, which have quite the same processing function but are quite different in producer, programming language, algorithm and so on, are operated by one controller (or computer) and the results of processing of the two or more programs are checked or compared by a comparator provided outside the controller (or computer), thereby improving the reliability. In this system based on software diversity too, it is required that the fail safety of the comparator for performing the check of the results of output should be ensured.

Thus, in order to structure a system having an ensured fail safety, it is hitherto required that a fail-safe circuit (or system) should be provided somewhere in the system.

Recently, the development of electronic equipments including computers are remarkable. Electronic parts such as microprocessors are used everywhere. The structuring of a large system including the combination of such electronic equipments or parts is frequently made. According to the prior art mentioned above, a fail safety for such a large system will be ensured in such a manner that a special circuit having a fail safety ensured therefor (hereinafter referred to as fail-safe circuit) is provided everywhere. However, there is a problem that the provision of such fail-safe circuits is physically impossible due to the problems of delay time and performance and hence the fail-safe capability cannot be attained. Also, since such fail-safe circuits are special circuits which are not for general purpose, there is a problem that the structuring of the system requires a very high cost.

SUMMARY OF THE INVENTION

An object of the present invention is to provide an information processing system in which a fail-safe system can be structured by general purpose electronic parts or components without using special logical circuits.

To achieve the above object, one aspect of the present invention provides an information processing system comprising information processors in a redundant system configuration, in which each information processor includes means for converting the same control data into different data and outputting the converted data, synthesizing/decoding means for synthesizing data outputted from the information processors of the redundant system configuration and decoding the result of synthesis into the original data before conversion, whereby a failure in the information processing system is recognized based on an output of the synthesizing/decoding means.

In a preferred embodiment of the conversion of the same control data into different data, the control data is subjected to a masking process corresponding to each information processor after cyclic redundancy code bits have been added to the control data.

According to another aspect of the present invention, there is provided a maintenance system for electric power system in which the turn-on/turn-off of a breaker or switch provided in an electric power system is controlled by computers of a redundant system configuration. Each computer includes means for converting data indicative of the condition of turn-on/turn-off of the breaker into different data and outputting the converted data, and synthesizing/detecting means for synthesizing data outputted from the computers of the redundant system configuration and detecting whether or not the result of synthesis is the data indicative of the condition of turn-on/turn-off of the breaker. In the case where the synthesizing/detecting means makes a negative determination, the occurrence of a failure in the control computers of the redundant system configuration is recognized, thereby ensuring a safety in maintenance.

2

BRIEF DESCRIPTION OF THE DRAWINGS

Fig. 1 is a block diagram of an information processing system according to an embodiment of the present invention;

Fig. 2 is a diagram for explaining a processing in the case where each controller shown in Fig. 1 is in a condition of operation by triplicate system;

Fig. 3 is a diagram for explaining a processing performed by an output data generator of Fig. 1 in the case where each controller is in the condition of operation by triplicate system;

Fig. 4 is a diagram for explaining a processing in the case where each controller shown in Fig. 1 is in a condition of operation by duplicate system;

Fig. 5 is a diagram for explaining a processing performed by the output data generator of Fig. 1 in the case where each controller is in the condition of operation by the duplicate system;

Fig. 6 is a block diagram of an information processing system according to another embodiment of the present invention; and

Fig. 7 is a system block diagram showing an embodiment in the case where the present invention is applied to a remote maintenance system for electric power system.

DESCRIPTION OF THE PREFERRED EMBODIMENTS

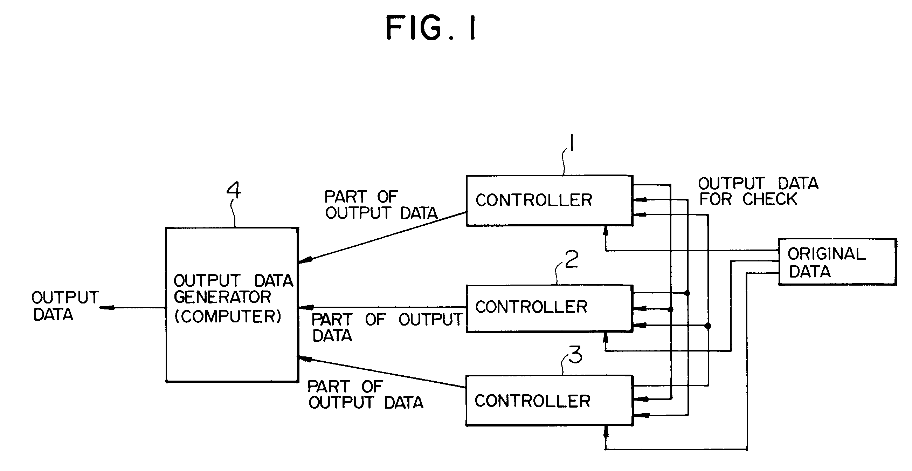

Fig. 1 is a block diagram of an information processing system according to an embodiment of the present invention. The information processing system is composed of controllers 1, 2 and 3 in a triplicate system configuration each of which generates control information and a computer 4 which generates a control output of the system on the basis of three outputs from the triplicate system or the controllers 1, 2 and 3. In order to allow for each system or controller in the triplicate system to check an error of output data, the controllers 1, 2 and 3 are connected to each other so that output data of each system or controller is transferred to the two other systems or controllers. Also, the controllers 1, 2 and 3 are connected to the computer 4 which generates a control output on the basis of output data from the controllers 1, 2 and 3 of the triplicate system configuration.

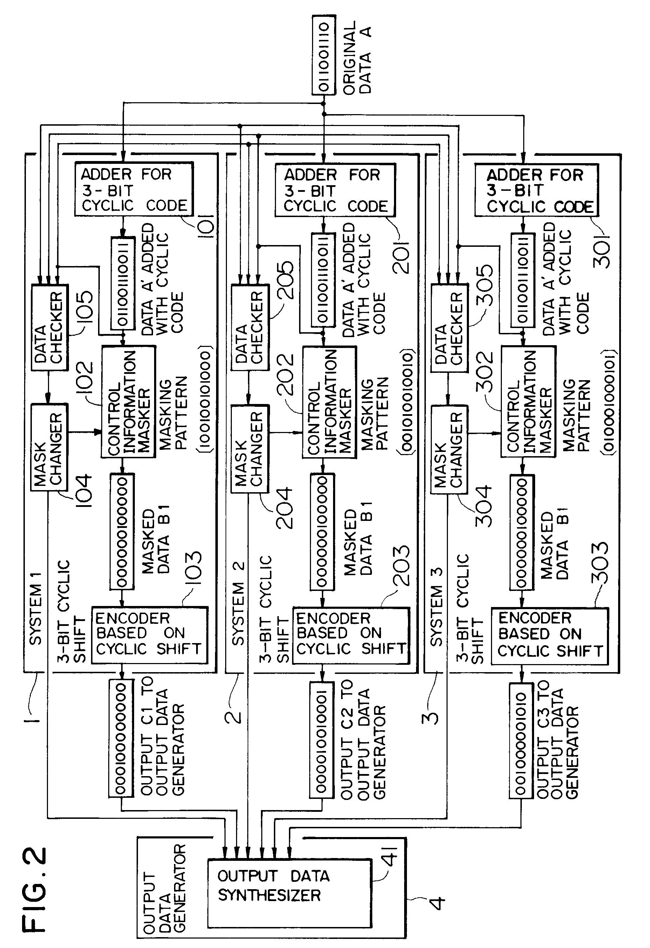

The following explanation will be made in conjunction with the case where for example, 9-bit information

$$A = [0,1,1,0,0,1,1,1,0]$$

is outputted as control information of the system (or original data). It is assumed that this data is outputted sequentially from the left. Fig. 2 illustrates a processing performed by the system of the present invention in the case where such control information A is outputted. First, each system or controller in the triplicate system generates the control information A. Next, in each system, an adder 101, 102 or 103 for adding a 3-bit cyclic code generates a 3-bit cyclic code for the control information A and adds the 3-bit cyclic code to the control information A as a redundancy code. In the present embodiment, a 4-bit code

$$C = [1,1,0,1]$$

is used as a generator code for generating the cyclic code.

Control information A' added with the cyclic code is determined as follows. Namely, a 3-bit coding part [0,0,0] is added to the 9-bit control information A to provide A*:

$$A^* = [0,1,1,0,0,1,1,1,0,0,0,0].$$

Three bits [0,0,0] in A* from the right thereof are the coding part. A remainder [0,1,1] obtained by dividing A* by C is a cyclic code. This cyclic code is added into the coding part of A* to obtain

$$A' = [0,1,1,0,0,1,1,1,0,0,1,1].$$

Next, in order to confirm whether or not the control information A' thus generated is correct, A' generated by the three systems are interchanged between those systems. A data checker 105, 205 or 305 of each system confirms whether or not all of the data generated by the three systems coincide. A processing in the case where the data checker detects an error of the control information will be explained later on. Herein, explanation will first be made of the case where no error is detected as a result of check of control information by each system following the interchange of control information between the three

3

systems.

If the absence of an error is confirmed as the result of check by each system for control information generated by the three systems, a mask changer 104, 204 or 304 selects an optimal masking pattern with which the masking of control data is made by a control information masker 102, 202 or 302.

Table 1

| CONDITION OF CONTROLLER | SYSTEM: MASKING PATTERN | KEY TO ENCODING BASED ON CYCLIC LOGICAL SHIFT |
|---|---|---|
| OUTPUTS OF SYSTEM-1, -2 AND -3 CONTROLLERS ARE NORMAL | SYSTEM 1: 100100101000<br><br>SYSTEM 2: 001010010010<br>SYSTEM 3: 010001000101 | 3-BIT LOGICAL LEFT SHIFT |
| OUTPUT OF SYSTEM-1 CONTROLLER IS ERRONEOUS | SYSTEM 2: 100010110101<br><br>SYSTEM 3: 011101001010 | 6-BIT LOGICAL LEFT SHIFT |
| OUTPUT OF SYSTEM-2 CONTROLLER IS ERRONEOUS | SYSTEM 1: 101010110101<br><br>SYSTEM 3: 010101001010 | 8-BIT LOGICAL LEFT SHIFT |
| OUTPUT OF SYSTEM-3 CONTROLLER IS ERRONEOUS | SYSTEM 1: 100010110101<br><br>SYSTEM 2: 011101001010 | 10-BIT LOGICAL LEFT SHIFT |

Table 1 shows the operating conditions of the controllers of the three systems and patterns for masking of control information. In the case where each of the three systems detects the absence of an error as the result of check of control information, an operation by triplicate system is assumed since it can be considered that all of the controllers of the three systems are normally operating. Since a masking pattern in the controller of the system 1 upon operation by triplicate system is, for example,

$P31 = [1,0,0,1,0,0,1,0,1,0,0,0]$,

a masking process of A' ∗ P31 for making a logical product of the control information A' and the masking pattern P31 in the controller of the system 1 is performed so that the control information is converted into the following information:

$B1 = [0,0,0,0,0,0,1,0,0,0,0,0]$.

The logical product made here is a product in units of one bit.

Also, since a masking pattern in the controller of the system 2 upon operation by triplicate system is

$P32 = [0,0,1,0,1,0,0,1,0,0,1,0]$,

a masking process of A' ∗ P32 for making a logical product of the control information A' and the masking pattern P32 in the controller of the system 2 is performed so that the control information is converted into the following information:

$B2 = [0,0,1,0,0,0,0,1,0,0,1,0]$.

Further, since a masking pattern in the controller of the system 3 upon operation by triplicate system is

$P33 = [0,1,0,0,0,1,0,0,0,1,0,1]$,

a masking process of A' ∗ P33 for making a logical product of the control information A' and the masking pattern P33 in the controller of the system 3 is performed so that the control information is converted into the following information:

4

B3 = [0,1,0,0,0,1,0,0,0,0,0,1].

After the masking process has been completed, the encoding of data based on a cyclic logical shift of data is made by an encoder 103, 203 or 303. Table 1 shows a relationship between the operating condition of the triplicate system and a cyclic logical shift to be made or the number of bits by which the cyclic logical shift is to be made. When the controllers of the three systems are normally operating, a key to data encoding is a 3-bit logical left shift. Therefore, data outputted from each system is as follows:

(System 1) C1 = [0,0,0,1,0,0,0,0,0,0,0,0]
(System 2) C2 = [0,0,0,0,1,0,0,1,0,0,0,1]
(System 3) C3 = [0,0,1,0,0,0,0,0,1,0,1,0].

In the case where there is no failure in the controllers of the three systems, the three output data C1, C2 and C3 shown above are transmitted to the computer 4 which generates a control output. In the following, explanation will be made of a scheme of data decoding performed by the control output generating computer 4.

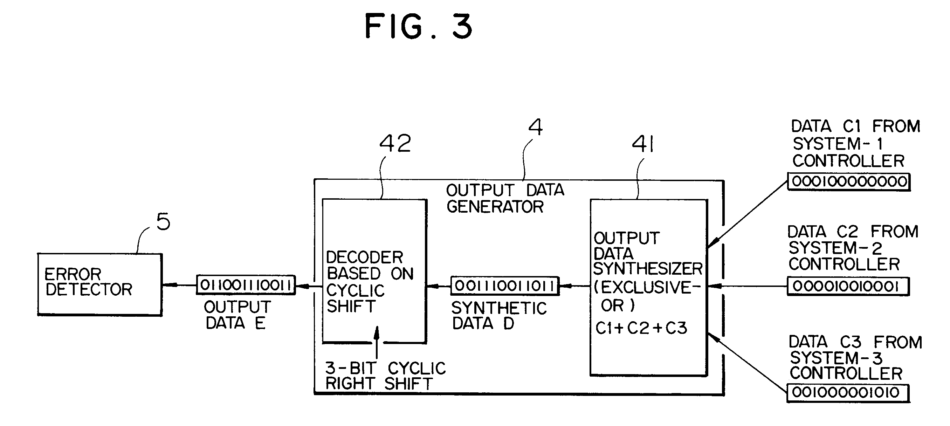

Fig. 3 shows the procedure of a decoding process performed by the control output generating computer 4. First, an output data synthesizer 41 in the control output generating computer 4 produces an exclusive OR combination of three data C1, C2 and C3 transmitted from the controllers of the three systems. As a result, the following data is generated:

D = C1 + C2 + C3 = [0,0,1,1,1,0,0,1,1,0,1,1].

When the operation for producing the exclusive OR combination of the three data transmitted from the controllers of the three systems is completed, a cyclic shift decoder 42 in the control output generating computer 4 performs a process for decoding of the encoded data on the basis of a cyclic logical shift. The decoding process makes a conversion inverse to the conversion made by the encoding process in the controller as shown in Table 1. Namely, a cyclic logical right shift is made by bits the number of which is equal to the number of bits by which the cyclic logical left shift was made in the encoding process. In this example, since it is recognized that the system is in a condition of operation by triplicate system in which all of the controllers 1, 2 and 3 of the three systems are normally operating, the control output generating computer 4 performs a 3-bit logical right shift as the decoding process. Accordingly, final data obtained is as follows:

E = [0,1,1,0,0,1,1,1,0,0,1,1].

Namely, the data E ultimately outputted from the present system is equal to A'.

In the foregoing, the processing scheme has been explained in conjunction with the condition of operation by triplicate system in which all of the controllers of the three systems are normally operating. In the following, explanation will be made of the case where the controllers of the systems 2 and 3 detect an error of output data of the controller of the system 1 as a result of data check by each system following the interchange of the data A' added with cyclic redundancy code between the three systems.

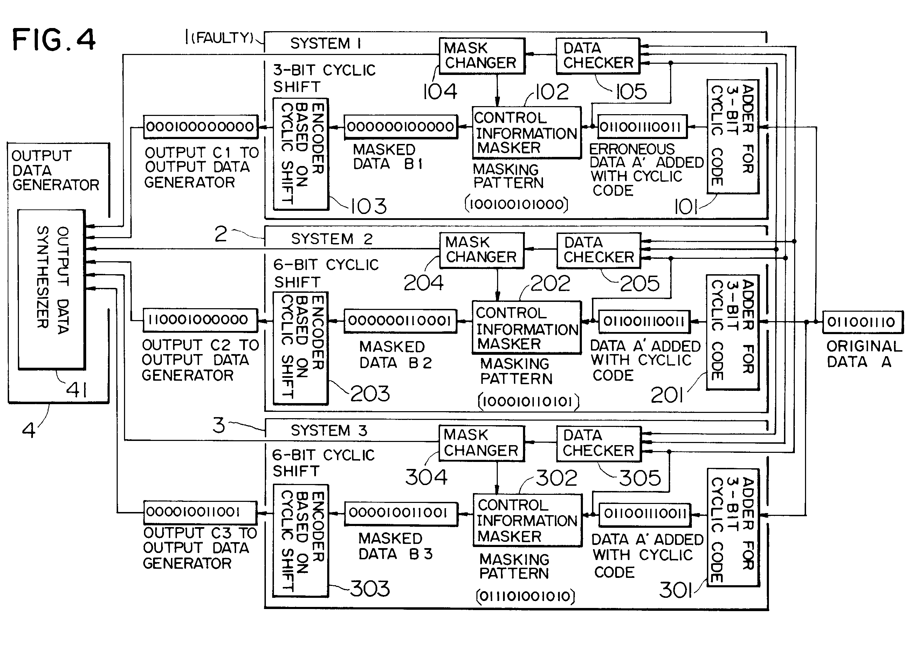

Fig. 4 shows the outline of a processing performed in the case where the controllers are in a condition of operation by duplicate system. In this case, the controllers of the systems 2 and 3 inform the control output generating computer 4 that the output of the controller of the system 1 is erroneous. Namely, the computer 4 is informed of a change-over of the operating condition of the triplicate system from the condition of operation by triplicate system to a condition of operation by duplicate system based on the controllers of the systems 2 and 3. Also, each of the controllers of the systems 2 and 3 turns itself to the condition of operation by duplicate system based on the systems 2 and 3.

In this case, since a masking pattern in the controller of the system 2 upon operation by duplicate system based on the controllers of the systems 2 and 3 is

P22 = [1,0,0,0,1,0,1,1,0,1,0,1],

a masking process of A' * P22 for making a logical product of the control information A' and the masking pattern P22 in the controller of the system 2 is performed so that the control information is converted into the following information:

B2 = [0,0,0,0,0,0,1,1,0,0,0,1].

The logical product made here is a product in units of one bit.

Also, since a masking pattern in the controller of the system 3 upon operation by duplicate system based on the controllers of the systems 2 and 3 is

P23 = [0,1,1,1,0,1,0,0,1,0,1,0],

a masking process of A' $*$ P23 for making a logical product of the control information A' and the masking pattern P23 in the controller of the system 3 is performed so that the control information is converted into the following information:

B3 = [0,1,1,0,0,1,0,0,0,0,1,0].

After the masking process has been completed, the encoding of data based on a cyclic logical shift of data is made by an encoder 103, 203 or 303. According to Table 1, a key to data encoding in the case of the condition of operation by duplicate system based on the controllers of the systems 2 and 3 is a 6-bit logical left shift. Therefore, data outputted from the controllers of the systems 2 and 3 are as follow:

(System 2) C2 = [1,1,0,0,0,1,0,0,0,0,0,0]
(System 3) C3 = [0,0,0,0,1,0,0,1,1,0,0,1].

When the operation by duplicate system based on the controllers of the systems 2 and 3 is made, the two output data C2 and C3 shown above are transmitted to the computer 4 which generates a control output. In the following, explanation will be made of a scheme of data decoding performed by the control output generating computer 4.

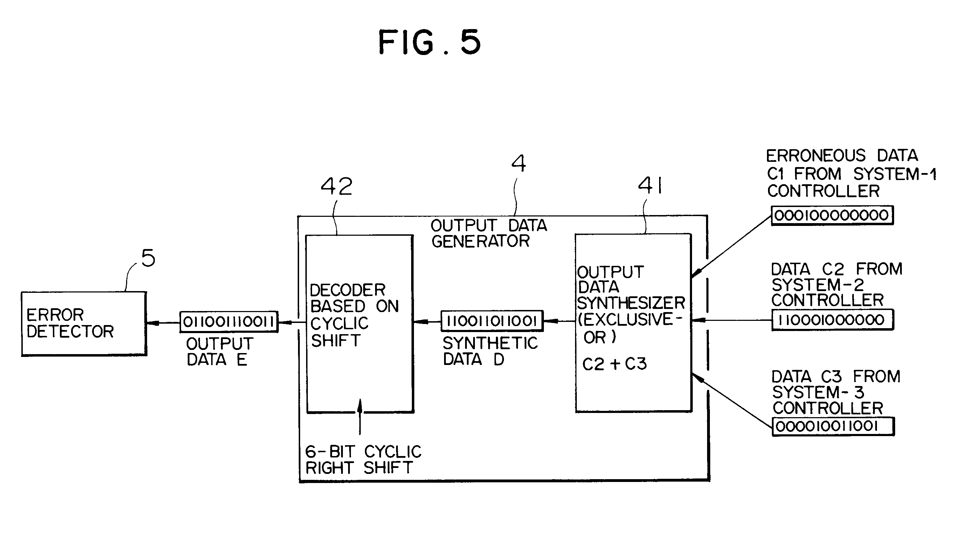

Fig. 5 shows the procedure of a decoding process which is performed by the control output generating computer 4 upon operation by duplicate system based on the controllers of the systems 2 and 3. As shown in Fig. 5, the output data synthesizer 41 in the control output generating computer 4 produces an exclusive OR combination of two data C2 and C3 transmitted from the controllers of the systems 2 and 3. As a result, the following data is generated:

D = C2 + C3 = [1,1,0,0,1,1,0,1,1,0,0,1].

When the operation for producing the exclusive OR combination of the two data transmitted from the controllers of the systems 2 and 3 is completed, the cyclic shift decoder 42 in the control output generating computer 4 performs a process for decoding of the encoded data on the basis of a cyclic logical shift. Since it is recognized that the system is in a condition of operation by duplicate system based on the controllers of the systems 2 and 3, the control output generating computer 4 performs a 6-bit logical right shift as the decoding process which makes a conversion inverse to the conversion made by the encoding process in the controller as shown in Table 1. Accordingly, final data obtained is as follows:

E = [0,1,1,0,0,1,1,1,0,0,1,1].

Namely, the data E ultimately outputted from the present system is equal to A'.

The similar processing is performed for a condition of operation by duplicate system based on the controllers 1 and 3 and a condition of operation by duplicate system based on the controllers 1 and 2, as well.

In this system, when one of the three controllers becomes faulty upon operation by triplicate system so that it generates crucial control information which may incur dangerous control if an error occurs, each of the two other normal controllers changes the pattern for masking of data and the key to data encoding based on cyclic bit shift into those corresponding to an operation by duplicate system and transmits the corresponding output data to the control output generating computer 4. On the other hand, the faulty controller continues to send erroneous data to the computer 4 while using an erroneous masking pattern and an erroneous key to encoding based on cyclic bit shift (for example, the masking pattern and the key to encoding which are used in the case of the operation by triplicate system). At this time, even if the computer 4 erroneously performs the decoding process which is used in the case of the operation by

6

triplicate system, the computer 4 generates insignificant data since data outputted from the three controllers are scrambled in the computer 4 by making a logical product or exclusive OR combination thereof. The error of this data generated can be detected by an error or failure detector 5 which may be a code check circuit generally used for code check such as parity check. Namely, in the case where the actual operating condition of the controllers 1, 2 and 3 of the three systems and the operating condition thereof recognized by the computer 4 do not coincide with each other, the error of data can be detected by the code check circuit. Though the present embodiment has been explained on the basis of the example using the 3-bit cyclic redundancy code, the improvement of reliability of data error detection can be attained by increasing the bit length of the redundancy code.

Accordingly, in the case where the check of an error of data based on a cyclic redundancy code is made by the error detector 5, as mentioned in conjunction with the present embodiment, the whole of the present system can be made fail safe if fail-safe operation of the error detector 5 is ensured. Also, consider the case where a controller outputs a certain significant composition or sentence as a string of character codes. In this case too, even if one of controllers of three systems becomes faulty so that it outputs erroneous data and the output data generating computer 4 erroneously takes in the output of the faulty system, insignificant data is generated since data from the three systems are scrambled in the computer 4. If such data in a string of character codes is outputted to a display device such as a printer or a terminal device which may be used as the error detector 5, a person or machine monitoring the display device can recognize the occurrence of errors or failures in the controller and the computer since insignificant data in a string of character codes is displayed as insignificant data on the display device. Accordingly, in the case where a controller outputs a string of character codes, fail safety can be ensured with no intervention of a fail-safe circuit since a composition described by the character code string is data with large redundancy, by itself.

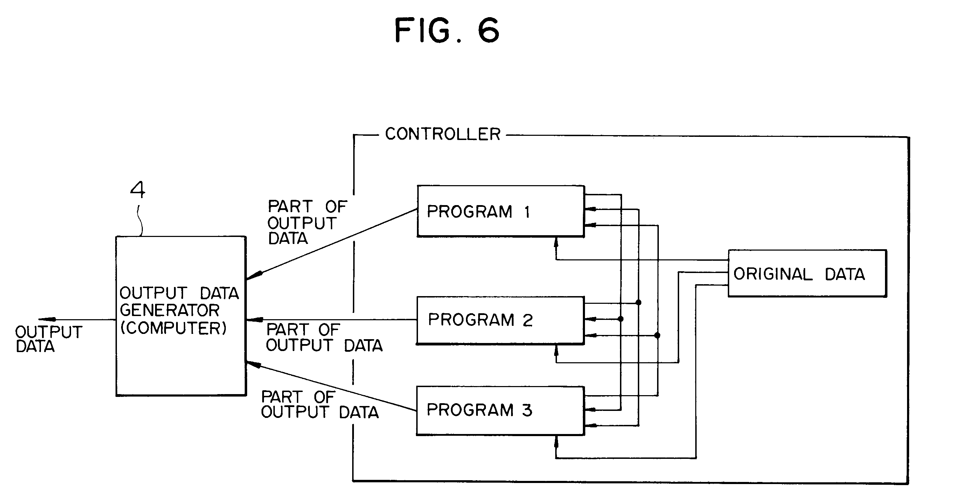

Fig. 6 shows an embodiment in which three programs 1, 2 and 3 having different versions run by one controller. The three programs are the same in function or provide the same output for the same input but are quite different versions developed by different developers, programming languages and so on. Each of outputs of the three programs is subjected to such data masking and encoding as explained in conjunction with the foregoing embodiment. The masked and encoded output data are subjected to a decoding process in an output data generator or computer 4 according to a method as shown in Fig. 3 or 5. Thus, the present invention is applicable to a system based on hardware diversity as shown in Fig. 1 as well as a system based on software diversity as shown in Fig. 6.

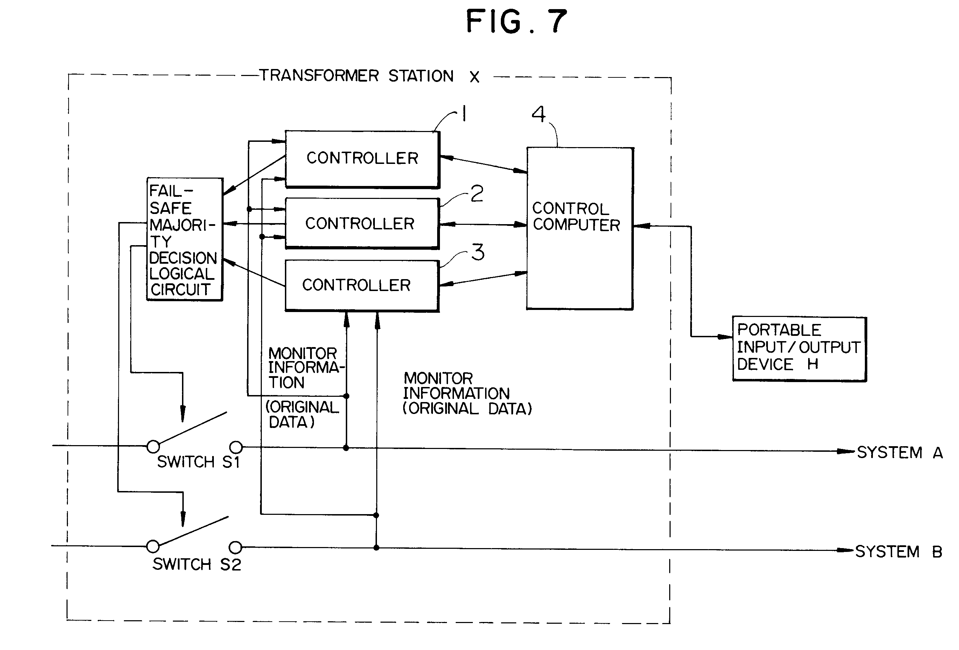

Fig. 7 shows an embodiment in the case where the present invention is applied to a remote maintenance system for electric power system. When a worker starts a working, the worker controls an electric power system from a maintenance site by use of a portable input/output device H. For example, when the maintenance/check of a system A is to be made, a current flowing in the system A must be stopped in order to secure the safety of the worker. At this time, the worker requests three controllers 1, 2 and 3 of a triplicate system configuration in a transformer station X by use of the portable input/output device H to turn a switch S1 of the system A off. Each of the three controllers 1, 2 and 3 performs a processing for turning the switch S1 off to send control data (or control data for turn-off of the switch S1) to a fail-safe majority decision logical circuit F. The fail-safe majority decision logical circuit F makes a majority decision for control data sent from the three controllers 1, 2 and 3 to make an ON/OFF control of the system A and a system B. For example, when control data making a request for the turn-off of the switch S1 of the system A is sent from each of the three controllers, the fail-safe majority decision logical circuit F turns the switch S1 off.

Also, the conditions of the systems A and B (or the conditions of turn-on/turn-off of the switches S1 and S2) are monitored in a fail-safe manner by each of the three controllers 1, 2 and 3. When the turn-off of the switch S1 is monitored or detected, each controller outputs answer information to the portable input/output device H carried by the worker. It is assumed that the answer information as original data generated is a character string of "SWITCH S1 OFF CONTROL COMPLETED". In each of the three controllers, this answer information is subjected to a processing for addition of a redundancy code such as CRC, a masking process and an encoding process. The output data thus processed is sent to a control computer 4. The control computer 4 performs the synthesis of the output data and the decoding of the synthetic data to decode the output data, and the decoded output data is outputted to the portable input/output device H. In the portable input/output device H, the check is fail-safely made of whether or not the output data sent from the computer 4 is a code word. If the output data is a code word, a character string sent as the output from the computer is displayed on a display unit of the portable input/output device. If the output data is not a code word, the occurrence of an error is displayed on the display unit.

7

As apparent from the foregoing, a system having an ensured fail safety can be structured by applying the present invention to the work of electric power system maintenance.

According to the present invention, a system having an ensured fail safety can be structured without using a special fail-safe circuit.

## Claims

1. An information processing system (1, 2, 3) comprising information processors in a redundant system configuration, in which each of said information processors comprises adding means (101, 201, 301) for adding cyclic code bits to the same data to generate code added data, masking means (102, 202, 302) for applying a predetermined masking to said code added data to generate masked data, data comparing means (105, 205, 305) for comparing said code added data with the code added data generated by the other information processors, mask changing means (104, 204, 304) for changing said masking by said data comparing means, encoding means (103, 203, 303) for subjecting said masked data to a cyclic shift to generate encoded data, synthesizing means (41) for synthesizing the encoded data from said information processors of the redundant system configuration to generate synthetic data, decoding means (42) for subjecting said synthetic data to an inverse cyclic shift to generate decoded data, and failure detecting means (5) for detecting a failure in the information processing system on the basis of an output of said decoding means.

2. An information processing system according to Claim 1, wherein said failure detecting means includes displaying means for displaying the failure in the information processing system.

3. An information processing system according to Claim 1, wherein said failure detecting means includes means for checking a signal outputted from said decoding means.

4. An information processing system (1, 2, 3) comprising information processors in a redundant system configuration,
   each of said information processors comprises means (101, 201, 301) for applying a redundant code to data to produce redundant code added data, masking means (102, 202, 302) for masking said redundant code added data by predetermined masking information items to produce masked data, and coding means (103, 203, 303) for coding said masked data, and
   said information processing system comprising an output data generator (4) including synthesizing means (41) for synthesizing coded data outputted from said information processors of the redundant system configuration and decoding means (42) for decoding the coded data synthesized by said synthesizing means.

5. An information processing system according to Claim 4, wherein said masking information items are allotted for said information processors of the redundant system configuration so that different information items are provided from said information processors, respectively.

6. An information processing system according to Claim 5, wherein the masking information is changed in accordance with the processing condition of each of said information processors of the redundant system configuration.

7. An information processing system comprising information processors in a redundant system configuration, in which said information processors respectively output incomplete output data which are different on application, and the information processing system comprises means for synthesizing a predetermined number of output data in a group of incomplete output data outputted from all of said information processors of the redundant system configuration to generate complete output data and means for monitoring the completion of said complete output data.

8. An information processing system according to Claim 7, wherein each of said information processors of the redundant system configuration includes means for interchanging information between said information processors to recognize the operating conditions of said information processors of the redundant system configuration, thereby judging a failure in said information processors, whereby said complete output data is generated using normal data.

**9.** A maintenance system for electric power system in which the turn-on/turn-off of a breaker (S1, S2) provided in an electric power system (1, 2, 3) is controlled by computers of a redundant system configuration, each of said computers comprising coding means for coding the same data indicative of the condition of turn-on/turn-off of said breaker into different data which is in turn outputted, synthesizing means for synthesizing data outputted from said coding means, and decoding means for decoding data outputted from said synthesizing means, the occurrence of a failure being recognized on the basis of an output of said decoding means.

**10.** A maintenance system for electric power system according to Claim 9, wherein said coding means includes means for adding cyclic bits to said same data and subjecting the cyclic bit added data to a predetermined masking.

**11.** A maintenance system for electric power system (1, 2, 3) in which the turn-on/turn-off of a breaker (S1, S2) provided in an electric power system is controlled by computers of a redundant system configuration, each of said computers comprising means for applying a redundant code to data indicative of the condition of turn-on/turn-off of said breaker to produce redundant code added data, masking means for masking said redundant code added data by predetermined masking information to produce masked data, synthesizing means for synthesizing said masked data, and decoding means for decoding data from said synthesizing means into the data indicative of the condition of turn-on/turn-off of said breaker.

# FIG. 1

EP 0 556 805 A2

FIG.2

# FIG. 3

ERROR DETECTOR

OUTPUT DATA E `01100110011`

DECODER BASED ON CYCLIC SHIFT — 42

3-BIT CYCLIC RIGHT SHIFT

SYNTHETIC DATA D `00110011011`

OUTPUT DATA GENERATOR — 4

OUTPUT DATA SYNTHESIZER (EXCLUSIVE-OR) C1+C2+C3 — 41

DATA C1 FROM SYSTEM-1 CONTROLLER `000100000000`

DATA C2 FROM SYSTEM-2 CONTROLLER `000010010001`

DATA C3 FROM SYSTEM-3 CONTROLLER `001000001010`

5

EP 0 556 805 A2

# FIG.4

SYSTEM 1 | (FAULTY)

MASK CHANGER — 104

DATA CHECKER — 105

3-BIT CYCLIC SHIFT

ENCODER BASED ON CYCLIC SHIFT — 103

000100000000 — OUTPUT C1 TO OUTPUT DATA GENERATOR

000000100000 — MASKED DATA B1

CONTROL INFORMATION MASKER — 102
MASKING PATTERN (100100101000)

01100111 0011 — ERRONEOUS DATA A' ADDED WITH CYCLIC CODE — 101

ADDER FOR 3-BIT CYCLIC CODE

---

OUTPUT DATA GENERATOR

OUTPUT DATA SYNTHESIZER — 41

4

---

SYSTEM 2 — 2

MASK CHANGER — 204

DATA CHECKER — 205

6-BIT CYCLIC SHIFT

ENCODER BASED ON CYCLIC SHIFT — 203

110001000000 — OUTPUT C2 TO OUTPUT DATA GENERATOR

000000110001 — MASKED DATA B2

CONTROL INFORMATION MASKER — 202
MASKING PATTERN (100010110101)

01100111 0011 — DATA A' ADDED WITH CYCLIC CODE — 201

ADDER FOR 3-BIT CYCLIC CODE

01100111 0 — ORIGINAL DATA A

---

SYSTEM 3 — 3

MASK CHANGER — 304

DATA CHECKER — 305

6-BIT CYCLIC SHIFT

ENCODER BASED ON CYCLIC SHIFT — 303

000010011001 — OUTPUT C3 TO OUTPUT DATA GENERATOR

000010011001 — MASKED DATA B3

CONTROL INFORMATION MASKER — 302
MASKING PATTERN (011101001010)

01100111 0011 — DATA A' ADDED WITH CYCLIC CODE — 301

ADDER FOR 3-BIT CYCLIC CODE

EP 0 556 805 A2

13

# FIG. 5

EP 0 556 805 A2

# FIG. 6

CONTROLLER

ORIGINAL DATA

PROGRAM 1

PROGRAM 2

PROGRAM 3

PART OF OUTPUT DATA

PART OF OUTPUT DATA

PART OF OUTPUT DATA

OUTPUT DATA GENERATOR (COMPUTER)

4

OUTPUT DATA

# FIG. 7

TRANSFORMER STATION X

CONTROLLER 1

CONTROLLER 2

CONTROLLER 3

FAIL-SAFE MAJORITY DECISION LOGICAL CIRCUIT

CONTROL COMPUTER 4

PORTABLE INPUT/OUTPUT DEVICE H

MONITOR INFORMATION (ORIGINAL DATA)

MONITOR INFORMATION (ORIGINAL DATA)

SWITCH S1

SWITCH S2

SYSTEM A

SYSTEM B